# EUROPEAN PATENT APPLICATION

(11) **EP 4 503 854 A1**
(43) Date of publication of application: **05.02.2025**
(21) Application number: 23718368.6
(22) Date of filing: 23.03.2023
(51) Int. Cl.: H05B 3/72, A47J 37/06

(54) **ELECTRIC GRILL**

(30) Priority: 24.03.2022 PT 2022117880
(71) Applicant: FLAMA, FÁBRICA DE LOUCAS E ELECTRODOMÉSTICOS, SA, 3700-727 Cesar (PT)
(72) Inventor: DE CAMPOS PAULA, Pedro Jorge, 3800-867 Aveiro (PT)
(74) Representative: Zimmermann, Tankred Klaus
(86) International application number: PCT/PT2023/050008
(87) International publication number: WO 2023/182900

(57) **Abstract**

The present invention refers to an electric grill (1) for cooking food.

The electric grill (1) presents a heating disposition (2) and a grill plate (3) that presents a generally planar shape and comprises a plurality of materials in layers, including at least one upstream layer (31) operatively associated with the heating disposition (2) and a downstream layer (32) that includes the food placement surface.

## Description

### Field of the invention

The present invention relates to grills for cooking food, in particular to electric grills with a heat source disposition operatively associated with a heat transfer disposition to the food to be cooked.

### Prior art

The prior art includes several solutions for different components of electrical grills used for cooking food.

A particularly important aspect is that of efficient heat transfer between the heat source, typically provided by an electrical resistance, and the surface where food is placed typically provided in a planar format, including a distribution as uniform as possible of surface temperature along said food placement surface.

In this context, it is known the possibility of using dispositions of multiple layers of different materials with different electrical and thermal characteristics.

Document US 5,422,459 discloses a composite electric heating plate that includes a heating plate above, a board underneath with a high heat transfer coefficient, an inferior board with a low heat transfer coefficient and a electric heating tube disposed between said above heating plate and the inferior board.

Document EP 0790754 B1 is not directly related with food grilling devices, but to heating elements provided in multiple layers. In particular, a first layer can be an electric insulating element that can also be heat conducting, a second layer resistive to electricity, in the form of silicone loaded with electricity conducting filling, a third layer with areas for connecting to an electricity supply source, a fourth layer in a electricity protection composite, including epoxy, polyamide, PCB, silicones and similar.

Document EP 0785042 B1 discloses a cooking utensil and process of fabrication thereof, whereby the utensil comprises a body extruded from a steel plate that is enamelled internally and externally, with a copper plate that is covered with a steel plate, so that forms multiple layers of different metallic materials.

Document EP 0970648 B1 discloses a grill plate that also presents three layers of different metallic materials.

Document US 10,798,786 B2 discloses a heating device that includes a cooking plate in vitro-ceramic with a thickness of some millimetres, a heating device underneath thereof. This heating device can include a support disc provided in micanite and configured so that supports heating means on the upstream and downstream sides, in terms of prevailing heat transmission direction towards food. the heating means are thick film conductors provided in an adequate material, and including a plurality of heating conductors so as to cover the underneath side and the top side of the support disc.

### Description of the invention

The objective of the present invention is to disclose an electric grill that provides greater heat transfer efficiency, including a more uniform temperature distribution on the food placement surface, and, simultaneously, better heat resistance and food grade on the food placement surface.

This objective is solved by the present invention by means of an electric grill according to claim 1, whereby preferred embodiments are described in the dependent claims.

In particular, the objective of the present invention is solved by means of an electric grill that comprises a heating disposition housed in confined manner inside of a casing part and a multi-layered grill plated retained in the heating disposition so that does not touch on the casing part.

The electric grill can present a single grill plate.

The electric grill can present a grill plate retained in a casing part so that elevates in at least most part of its extension in height, preferentially completely above the casing part.

The grill plate can be retained only in the heating disposition, and not present any contact with the casing part, and the heating disposition can be retained in the casing part by means of a plurality of fixation elements elongated and vertical so that the contact of the heating disposition with the casing part is minimised.

The grill plate can present a general shape of type concave open upwards, including a functional portion of plane surface for cooking food, and a rim portion that extends upwards in a first extension and downwards in a second extension including the free edge.

The grill plate can be provided in multiple layers, of type 3-ply or similar construction, including layers of at least two different metallic materials.

The grill plate can include two layers including a first layer upstream provided in a metallic material with higher thermal conductivity coefficient, preferentially bigger than than 150 W/m.K, preferentially bigger than 180 W/m.K, and a second layer downstream provided in a metallic material with food grade including a surface of the grill plate for cooking food.

The grill plate can comprise three layers including a first layer upstream, preferentially in a metallic material including at least one of iron, carbon and chrome, and a second layer downstream, preferentially provided in food grade metallic material, and further a third intercalary layer between the first and second layers, whereby the third layer is in this case provided in a metallic material with higher thermal conductivity coefficient, preferentially bigger than 150 W/m.K, preferentially bigger than 180 W/m.K.

### List of Figures

The present invention shall be hereinafter described in greater detail based upon preferred embodiments thereof and drawings thereof.

The Figures show:
- Figure 1:: perspective view of an embodiment of portable electric grill (1);
- Figure 2:: front cut view of an embodiment of electric grill (1) ;
- Figure 3:: front cut view of the embodiment of electric grill (1) ;
- Figure 4:: top perspective view of the electric grill (1) with cuts along a transversal plane and a longitudinal plane;
- Figure 5:: view of a first embodiment of a grill plate (3);
- Figure 6:: view of a first embodiment of a grill plate (3) and heating disposition (2);
- Figure 7:: view of a second embodiment of a grill plate (3);
- Figure 8:: view of a second embodiment of grill plate (3) and heating disposition (2).

### Detailed description of preferred embodiments of the invention

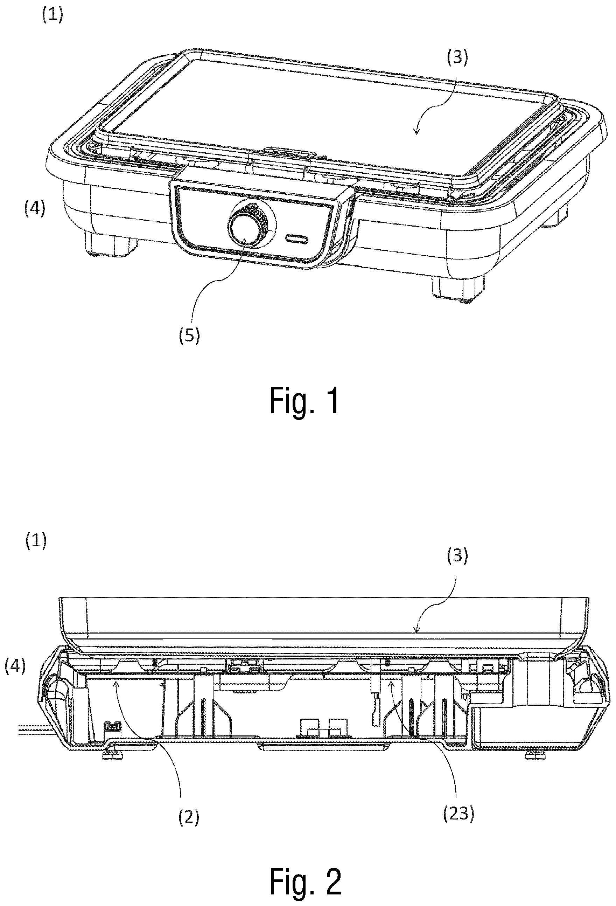

An electric grill (1) for cooking food according to the invention, includes a heating disposition (2) that can include at least one heating device (21) of type electric resistance disposed in heat conduction connection underneath, upstream in the prevailing heat conduction direction, of a grill plate (3) that includes an upwards-oriented surface over which food can be grilled (see **Figures 1** and **2**).

An embodiment of the grill plate (1) according to the invention can include a casing part (4) preferentially provided in a synthetic material, configured with dimensions and weight so that the grill (1) results portable and so that can be placed on a support surface.

The casing part (4) can present a user interface (5) and be configured so that can collect at least one heating device (2) functionally connected to an electric energy supply, for example a distribution grid of electric energy at 110-127 or 220-240 V AC, and operatively associated with the grill plate (3).

As results clear to the reader, electric grills (1) of the type of the present invention are adapted so that the heat transmitted to food mostly through heat conduction first between the heating devices (21) and the grill plate, and after between the surface of the grill plate and said food.

As it should also be known to the reader, electric grills (1) of the type of the present invention can be designed so as to provide surface temperatures on the grill plate above 200 °C, preferentially above 230 °C, particularly preferentially above 250 °C.

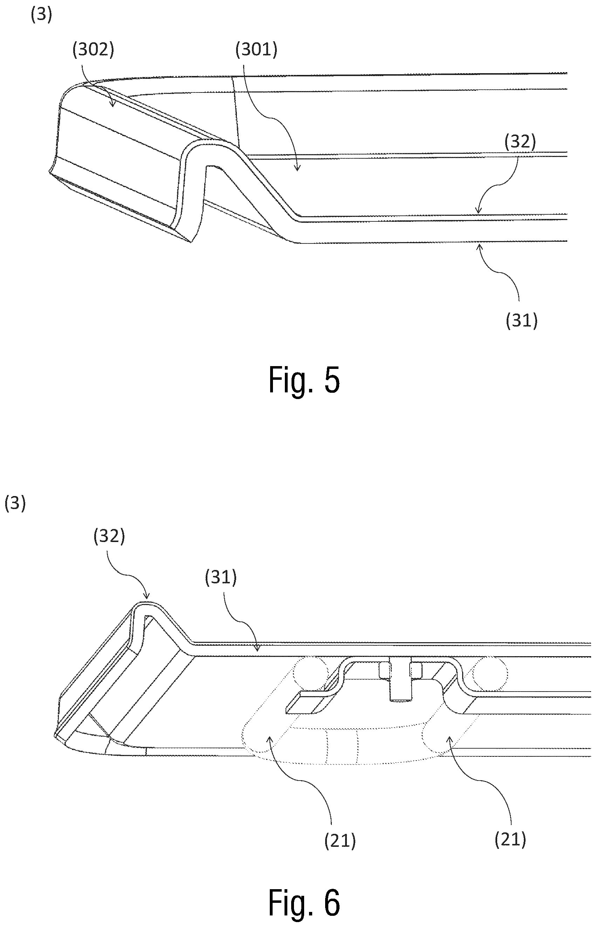

According to one aspect of the invention, the grill plate (3) is provided in multiple layers including at least two or at least three overlapping layers of different metallic materials, and retained so that is not rendered in contact with the grill plate (3), as shall be better described with relation to the embodiments of Figures 5 to 8.

As can be observed in the embodiment represented in **Figures 2** to **4****,** the multi-layered grill pate (3) is provided retained so that elevates in at least most part, preferentially in the totality of its height extension above at least one of: the heating device (2) and the casing part (4), whereby it is preferred when results a space between the perimeter of the grill plate (3) and the casing part (4) so that there is provided air circulation around the heating disposition inside the casing part (4).

Moreover, the heating disposition (2) can advantageously present a heat conditioning disposition (23) configured so as to reduce the heat transmission to the directions surrounding the heating devices (21) with exception of the direction of the grill plate (3).

Moreover, the heating disposition (2) is retained in the interior of the casing part (4) by a plurality of respective connections, and the grill plate (3) is retained in the heating disposition (2) by another plurality of respective connections.

It is preferred when the retention connections of the grill plate (3) to the heating disposition (2) and from the latter to the casing part (4) are provided along a similar direction, in particular in a direction similar to the one of the gravity force so that the assembly process at factory can be facilitated.

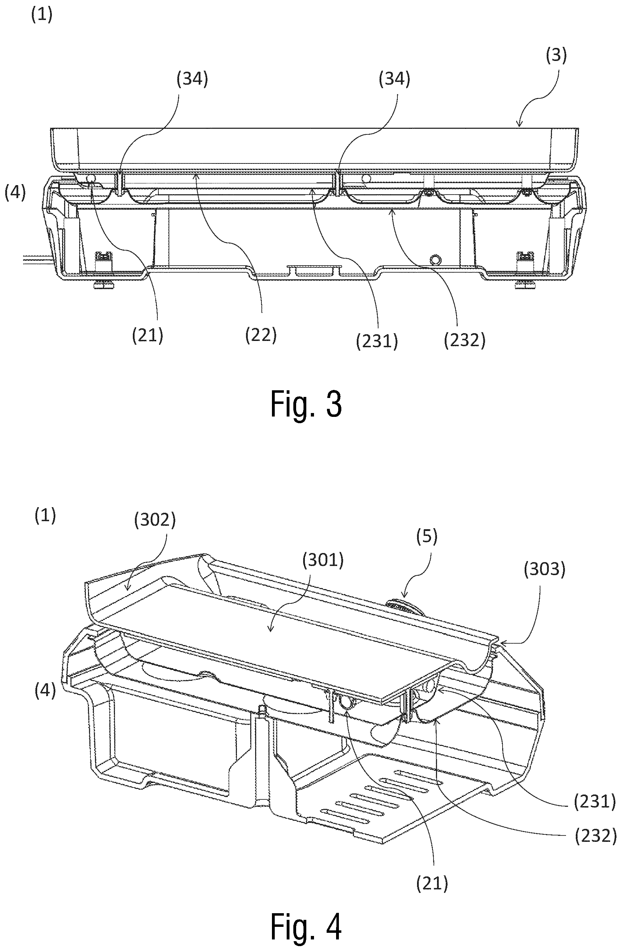

**Figure 4** shows an embodiment whereby the heating disposition (2) further presents at least one heat conditioning disposition (23; 231, 232) configured in form of box open on the top and disposed so as to confine the heating device (21) laterally and underneath so as to reduce the heat flux transferred in these directions.

The heat conditioning disposition (23) can include a first heat conditioning part (231) configured so that completely confines the heating devices (21) relative to the remaining interior of the casing part (4) but not relative to the grill plate (3).

Moreover, the heating disposition (2) can further include a second heat condition part (232) configured so that partially confines the first heat conditioning part (231), in particular so that only does not confine a slot that extends along the perimeter of the region between the grill plate (3) and the casing part (4).

As represented, the heating disposition (2) is configured so that the first and second heat conditioning parts (231, 232) provide a first and second heat conditioning chamber underneath the heating devices (21), and there further results a space with a general shape of chamber type underneath thereof inside the casing part (4). It is preferred when this chamber underneath the heat conditioning chambers presents a volume that is bigger than the volume thereof.

The grill plate (3) can be retained simultaneously on the first and second heat conditioning parts (231, 232), and the set formed by the heating disposition (2) and grill plate (3) can be retained supported by a plurality of connections retained on the second conditioning part (232) and in the base portion of the casing part (4).

These features provide a combination of advantages in terms of better heat conductivity and resistance to more elevated temperatures of the grill plate (3), as well as in terms of safety of operation of the electric grill (1).

In the case of the embodiment represented in **Figures 5** and **6****,** the heating disposition (2) only comprises heating devices (21) connected in heat conduction directly to a grill plate (3) that only presents two different metallic materials.

In this case, the grill plate (3) can present a first layer (31) in aluminium, aluminium alloy or metallic material with a heat conductivity coefficient that is at least approximately equal or bigger, and a second layer (32) in a metallic material that is food grade, such as for example an austenitic stainless steel.

The first layer (31) of the grill plate (3) can in this case present a layer thickness comprised between 0,3 and 1 mm, preferentially between 0,4 and 0,6 mm, whereas the second layer (32) can present a layer thickness comprised between 0,4 and 1 m, preferentially between 0,5 and 0,6 mm.

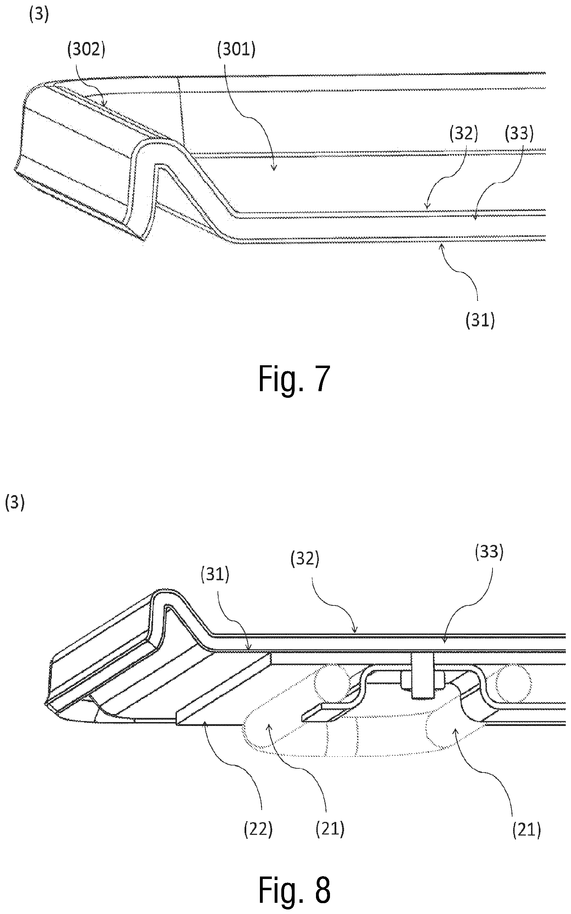

In the case of the embodiment represented in **Figures** 7 and **8****,** the heating device (2) comprises heating devices (21) and the heat distribution element (22) that is intercalated in heat conducting connection between the heating devices (21) and the grill plate (3). The heat distribution element (22) can be provided as an aluminium plate, aluminium alloy or metallic material with an at least approximately equal or bigger thermal conductibility coefficient. The heat distribution element (22) can present a layer thickness comprised between 0,6 mm and 5,0 mm, preferentially between 1,8 mm and 3,0 mm, and extend along at least most part of the area of the functional part (301) of the grill plate (3), so that can provide a more uniform distribution of heat generated by the heating devices (21) by the area oriented upstream of the first layer (31) thereof.

As can be further observed, the electric grill (1) can comprise two heating devices (21) in form of resistive conducting cable, configured for example in a U shape and arranged side-by-side directly underneath and in direct contact with the heat distribution element (22). The heating devices (1) can be retained in position by means of angled sheet plate and that can be retained by means of mechanic connections disposed between the U legs of each heating device (21) . In the case of a preferred embodiment, the mechanic connections of retention of the heating devices (21) retain the latter in the grill plate (3) and include elongated elements, for example of the type threaded shaft, pin or similar, associated with the grill plate (3) and retention elements, for example of the type threaded female or similar, on the inferior side. Said retention elements can also be disposed the other way round.

The grill plate (3) in this case presents three layers of different metallic materials.

It is preferred when a first layer (31) furthest upstream can be provided in ferritic stainless steel, so that there is provided a finishing with good aesthetic appearance and possibility of welded connections, and a second layer (32) furthest downstream can be provided in a metallic material with food grade, for example an austenitic stainless steel or metallic material of similar characteristics, so that there is provided a food grade surface for cooking food.

The first and second layers (31, 32) of the grill plate (3) can present a layer thickness comprised between 0,3 and 1 mm, preferentially between 0,4 and 0,6 mm.

The grill plate (3) can further include an intercalary layer (33) that can be provided in a metallic material with a thermal conductibility coefficient that is bigger that the one of the neighbouring metallic materials, for example in aluminium or copper.

The third layer (33) of the grill plate (3) can present a layer thickness comprised between 0,6 and 5 mm, preferentially between 1,8 and 3 mm.

## Claims

1. Electric grill (1) for cooking food, comprising a heating disposition (2) functionally connected to a electrical power supply and in heat conducting connection with a grill plate (3) that includes a top surface for cooking food,
whereby the heating disposition (2) and the grill plate (3) are retained in a grill casing (4),
**characterized**
**in that** the grill plate (3) comprises multiple layers of different metallic materials and is retained in heating conducting connection upon the heating disposition (2) so that is not in contact with the grill casing (4).

2. Electric grill (1) according to claim 1,
**characterized**
**in that** the heating disposition (2) includes at least one heating device (21) arranged in heat conducting connection upstream in the prevailing heat transmission direction, underneath the grill plate (3), whereby the heating device (21) is preferentially confined inside the grill casing (4) on all sides but not on the upwards oriented side and at least in most part of the extension of the grill plate (3),
and/ or
**in that** the multi-layered grill plate (3) is arranged so that the metallic material of a first layer (31) upstream thereof is provided in heat conducting connection with a different metallic material provided in form of layer and associated with the heating disposition (2), so that the multi-layered grill plate (3) is not in direct contact with the heating device (21).

3. Electric grill (1) according to claim 1 or 2, **characterized**
**in that** the heating disposition (2) comprises at least one heating device (21) of type electrical resistance disposed underneath and in direct contact with one of:
- the multi-layered grill plate (3), preferentially including at least three layers,
- a heat distribution element (22) provide in plate shape and disposed so that the top surface of the heat conduction element (22) is in direct contact with at least most part of the base surface of the multi-layered grill plate (3), and
**in that** the multi-layered grill plate (3) is provided retained so that it elevates at least in most part of, preferentially in its entire height extension above at least one of: the heating device (2) and the grill casing (4), whereby it is preferred when results a slot-like space between the perimeter of the grill plate (3) and the grill casing (4) so that there is provided air circulation around the heating disposition inside the grill casing (4).

4. Electric grill (1) according to claims 1 to 3, **characterized**
**in that** the heating disposition (2) comprises at least one heating device (21), optionally a heat distribution element (22), and further at least one heat conditioning disposition (23; 231, 232) configured in form of open top box and disposed so as to confine the heating device (21) laterally and underneath thereby reducing the heat flux transferred in these directions, and
**in that** the multi-layered grill plate (3) presents a general shape including a grill functional part (301) configured as a plane surface delimited by a rim part (302) configured as a collar that extends along at least part of the perimeter of the grill functional part (301), preferentially along at least two mutually opposing lateral regions, particularly preferentially along all perimeter regions but a frontal extension of the grill functional part (301), whereby it is preferred when the grill plate (3) presents a grill functional part (301) planar and inclined in the direction of the frontal extension and further presents a channel portion (303) that extends along at least the frontal extension of the grill functional part (301).

5. Electric grill (1) according to any of claims 1 to 4, **characterized**
**in that** the heating disposition (2) comprises at least one heating device (21) mechanically retained, preferentially in removable manner, inside the grill casing (4) but not directly to it, in respective retention regions in at least one heating conditioning disposition (23; 231, 232) disposed underneath the heating device (21), and
**in that** the grill plate (3) can include two layers including a first upstream layer of a metallic material with a thermal conductivity coefficient that is bigger than 150 W/m.K, preferentially bigger than 180 W/m.K, and a second downstream layer of a metallic material with food grade including on the food cooking surface of the grill plate (3).

6. Electric grill (1) according to any of claims 1 to 5, **characterized**
**in that** the heating disposition (2) comprises at least one heating device (21) provided in a disposition of planar type, with width and length bigger by at least one order of magnitude than the height, such as for example two heating devices (21) provided in a shape of power conducting cable arranged side-by-side extending in a common plane, in format of electric conducting cable preferentially conformed in U shape, or in shape of grid of conducting cables, preferentially with width and length of conducting cables bigger by at least two orders of magnitude than height thereof, for example in form of electric resistive film, and
**in that** the multi-layered grill plate (3) comprises at least two different metallic materials, including:
- a first layer (31) provided upstream in heat conducting connection with one of:
- a smaller part of its surface in contact with the heating device (21) and
- in at least most part of its surface in contact with the heat distribution element (22), and
- a second layer (32) upstream that includes the food cooking surface.

7. Electric grill (1) according to any of claims 1 to 6, **characterized**
**in that** the grill plate (3) comprises at least two, preferentially at least three overlapping layers of at least one of: different metals, different metallic alloys and different metallic composites, whereby the metallic material of less thermal conductivity is a food grade metallic material, and
**in that** the grill plate (3) comprises a first metallic material food grade with a layer thickness comprised between 0,3 and 1 mm, preferentially between 0,4 and 0,6 mm, and at least a second metallic material with a layer thickness that is at least two times, preferentially at least three times bigger than the layer thickness of the first metallic material.

8. Electric grill (1) according to any of claims 1 to 7, **characterized**
**in that** the grill plate (3) comprises at least three layers including a first layer (31) upstream, a second layer (32) downstream and further an intercalary layer (33) that presents a layer thickness that is at least two times bigger, preferentially at least three times bigger, particularly preferentially four times bigger than the layer thickness of the first and second layers (31, 32) upstream and downstream, and whereby a first layer (31) upstream is provided so that can resist to a temperature of at least 200 °C, preferentially of at least 250 °C, and a second layer (32) downstream is provided so that resists to corrosion.

9. Electric grill (1) according to any of claims 1 to 8, **characterized**
**in that** the grill plate (3) comprises a first layer upstream (31) provided in a ferritic stainless steel or in an austenitic stainless steel, a second layer downstream (32) provided in a food grade austenitic stainless steel, and further an intercalary layer (33) provided in a metallic material with a heat conductivity coefficient that is bigger than those of the adjacent metallic materials, preferentially in at least one of: in aluminium, aluminium alloy, copper and copper alloy.

10. Electric grill (1) according to any of previous claims, **characterized**
**in that** the grill plate (3) presents a rim part (302) configured so that extends upwards in a first extension when seen in side-cut view, and downwards in a second extension along an inclination and extension configured so that provides an open slot but covered on top, so that provides the ventilation of the interior but constrains an entry of eventual liquid or fat associated with cooking food in the electric grill (1), and
**in that** the multi-layered grill plate (3) presents a plurality of elongated elements (34) on a downwards-oriented face, configured so that can be retained in at least part of the heating disposition (2), preferentially in at least one reflexion plate (23).

11. Electric grill (1) according to any of previous claims, **characterized**
**in that** the heating disposition (2) and the casing part (4) are configured so that a first chamber confining the heating device (21) is not ventilated, and a second chamber adjacent to the first chamber and confining at least the most part thereof is ventilated to the exterior, including by means of an open slot formed between the grill plate (3) and the casing part (4) and that extends along at least most part, preferentially the totality of the perimeter between the grill plate (3) and the adjacent region of the casing part (4).

12. Electric grill (1) according to any of previous claims, **characterized**
**in that** the heating disposition (2) comprises at least one heating device (21) with a total heating power comprised between 1500 and 2400 W, preferentially between 1800 W and 2200 W, and
**in that** the electric grill (1) is adapted so that can provide surface temperatures in the food placement surface of the grill plate (3) of at least 220 °C, preferentially at least 240 °C.

13. Electric grill (1) according to any of the previous claims, **characterized**
**in that** the casing part (4) presents lateral portions that configure a convex shape with an inferior portion oriented generally downwards and an superior portion oriented generally upwards, and present a base part that presents retention elements of the heating disposition (2) and retention elements of the support footing of the electric grill (1), as well as openings configured so as to promote the ventilation of the interior air of the casing part configured so as to promote the air ventilation inside the casing part (4).

14. Electric grill (1) according to any of the previous claims, **characterized**
**in that** the casing part (4) presents a height designed so that results a free portion underneath the heat disposition (2), preferentially underneath the heat conditioning disposition (23), whereby said free portion presents a height that is bigger, preferentially at least two times bigger than the height of the heating disposition (2), and
**in that** the casing part (4) presents a height that is smaller than four times, preferentially smaller than three times the height of the grill plate (3).

15. Electric grill (1) according to any of the previous claims, **characterized**
**in that** the electric grill (1) comprises a casing part (4) configured so that confines the heating disposition (2), but does not confine the grill plate (3) and provides retention of all the components of the electric grill (1), and
**in that** the electrical grill (1) comprises a casing part (4) that presents a portable format, whereby the casing part (4) preferentially presents lateral portions configured so that provide manual apprehension by a user without touching on the grill plate (3).
